# EUROPEAN PATENT SPECIFICATION

(11) **EP 3 505 135 B1**
(45) Date of publication and mention of the grant of the patent: **27.07.2022**
(21) Application number: 17382907.8
(22) Date of filing: 26.12.2017
(51) Int. Cl.: A61C 9/00, A61C 8/00

(54) **SYSTEM FOR ESTABLISHING THE SPATIAL POSITIONING OF JAWS**
SYSTEM ZUR ERFASSUNG DER RÄUMLICHEN POSITION DES KIEFERS
SYSTÈME POUR LA DÉTECTION DU POSITIONNEMENT SPATIAL DE MÂCHOIRES

(43) Date of publication of application: 03.07.2019
(73) Proprietor: I2 Implantologia, S.L., 28006 Madrid (ES)
(72) Inventor: CUADRADO DE VICENTE, Luis, 28006 MADRID (ES)
(74) Representative: Herrero & Asociados, S.L.

(56) References cited:
- WO-A1-2016/151580
- US-A1- 2007 099 152
- US-A1- 2014 363 788
- US-A1- 2015 147 725
- US-A1- 2017 304 005

## Description

### Object of the Invention

As indicated by the title itself, the present invention relates to a system for the unmistakable spatial positioning of a patient's jaw during dental treatments that are prolonged over time.

Specifically, the system proposed by the invention allows establishing geometrically significant points within the patient's mouth such that the different digital files obtained by means of intraoral scanners or stereophotogrammetry over time can be digitally aligned, fused, linked, mixed or superimposed with respect to one another.

### Background of the Invention

As is known, the field of dentistry has undergone extensive development in recent years. This development is largely due to the emergence of powerful design software tools and modern manufacturing systems that achieve surprising results from both the esthetic and functional viewpoints, all of this within a minimum time which allows patients to recover masticatory function and appearance in a short period of time.

Furthermore, as a result of these techniques, errors and imprecisions made using more traditional or manual conventional techniques are drastically reduced, which allows significantly increasing accuracy and precision. This is the case, for example, of surgery for the placement of dental implants and the design of prostheses that will be placed in said implants, in which the use of said digital techniques for collecting data of the patient's mouth has become an increasingly more widespread practice due to high reliability and good results.

Specifically, the phase of collecting samples from the patient's mouth has evolved from being performed in a completely manual manner, using a deformable material such as silicone from which a model of the patient's mouth based on which said prostheses were designed was obtained, to using, first, laboratory scanners, and now intraoral scanners which allow obtaining in a quick and precise manner detailed digital information of the geometry of both the mouth itself and the teeth and implants that the patient may have in their mouth. Said information is then converted into a digital file on which work is performed through the corresponding software to create a digital model of the patient's mouth, which could then be made into an exact physical model by means of rapid prototyping technology, milling technology, etc.

Nevertheless, although the information provided by these systems is very precise, its use in therapy is often limited by the lack of tools to enable incorporating the information required by the laboratory to enable performing prosthetic work in a completely digital environment from the intraoral scan. Specifically, dental prosthesis design software developments are not able to correctly perform spatial positioning, or superimpose or align different digital images obtained by means of intraoral digital scanning if they do not have a sufficient number of reference points that can be used for this alignment. This is mainly due to the fact that the areas of the patient's mouth (palate, gums, etc.) do not have sufficient information for the system to able to obtain reference points that can be parameterized and geo-positioned digitally.

For example, in the process of collecting digital samples for the design of prostheses on implants, it is necessary to use elements capable of providing information about the exact position occupied by said implants in the patient's mouth. These elements are those commonly referred to as scanbodies, which perform the function of conventional transfers that were embedded in the silicone, marking the spatial position of said implants.

Specifically, said scanbodies are usually made up of two parts, one intended for being screwed onto the implants, and the other one, at its opposite end, formed by a geometrically significant element having dimensions sufficient for easy detection and parameterization.

Therefore, once the implants are placed on the jaw one of these scanbodies is screwed onto each of the implants, and scanning is then performed. The various files obtained are then processed using a software which, as a result of the presence of said elements, is capable of spatially positioning the exact points where said implants are placed, thereby obtaining a digital model of the patient's mouth which is an exact copy of the actual one.

However, dental interventions based on obtaining digital models obtained by means of intraoral scanners or other radiodiagnostic techniques are not reduced today to the simple placement of dental implants, but rather far from it.

For example, the copying of provisional or fixed or removable prostheses to provisional or definitive prostheses on implants, the evaluation of morphological and/or positional changes in jaws subjected to dental treatment, the copying of wax-up elements or provisional prostheses when making new provisional or definitive prostheses, etc., can be mentioned, among others.

In other words, there are a number of cases in which it is necessary to combine the information of the patient's mouth obtained during different stages taking place over a long period of time, during which changes occur in the mouth due to, among other reasons, movement of the teeth, morphological changes of the jaw itself, the presence/absence of teeth and/or prostheses, wound healing, etc.

In other words, the design software must be provided with files of the patient's mouth obtained over time so that the software can combine, align, superimpose said files, etc., to obtain the information required for each case.

Nevertheless, as has already been mentioned, for the prosthetic design software to be capable of aligning or combining files, i.e., superimposing the digital images obtained by means of the intraoral scans carried out at different times during the treatment, common points in the different scans that can be spatially geo-positioned in a perfect manner must be provided.

However, in this case using conventional scanbodies for positioning the aforementioned implants is not enough given that these scanbodies evidently only mark the position of the implants in the jaw. To carry out the entire prosthetic work, it is necessary to have information which not only indicates the position of the implants in the jaw, but which also contains all the information of the patient's jaw.

In other words, beyond just having unequivocal information of the position of the implants to create the digital model, what is desired is to obtain a digital model of the patient's entire jaw for carrying out, with said model, any of the aforementioned dental interventions and for being able to link this digital model with other digital models of the same patient at different times of treatment which contain other information, for example, the situation of the patient's original teeth or earlier prostheses, such as the initial scan and another subsequent scan, in the situation in which there are no longer such teeth or prostheses, but there are implants.

To solve this problem of which reference elements to use so that the image processing software is able to align or superimpose different files, some traditional approaches based on the use of palatine folds of the upper jaw are known. However, these techniques continue to lack reliability because, on one hand, teeth move and can thereby cause a change in the gum over time, in addition to the fact that gum wound healing processes or inflammations can cause the size or even the position thereof to change, and on the other hand, said folds do not necessarily exist (like in the case of the lower jaw) or they do not exist in a size that is sufficient for enabling the system to detect them in an unequivocal manner.

On the other hand, there are also small screws or scanbodies having a self-tapping end such that they can be screwed onto the patient's jaw and the other end of which has the geometrically significant element capable of being detected in an unequivocal manner by the image processing software for the subsequent alignment or combination of several images.

In this sense, patent document US2011/0045432 describing a screw of this type formed by a self-tapping part intended for being screwed onto the patient's jaw and a marker head that can be detected by radiological testing (such as tomography) which can be coupled to and uncoupled from said screw, is known.

Therefore, given that the marker head can be coupled to and uncoupled from the screw when desired, this allows said screw to be positioned in the patient's jaw during the required time, even months, during which time said marker head will be coupled as many times as necessary to perform tomography and to obtain the digital image of the patient's mouth with various radiological reference points.

On the other hand, the system described in ES2605052 belonging to this very applicant is known, wherein said patent document describes an intraoral scanning element comprising a first self-tapping end intended for being inserted into any point of the patient's jaw and a second end formed by an abutment which allows the spatial geo-positioning of the scanning element, where said first and second ends can also be coupled and uncoupled, so although it is not described, said first end may be fixed in the patient's jaw as long as necessary, capturing different images by means of an intraoral scanner during that time by simply coupling the second end.

Nevertheless, both systems have several drawbacks derived from the possibility of the part screwed onto the patient's jaw being able to remain there for weeks or even for several months.
- On one hand, said systems require the placement of several, at least two, of these elements in the patient, so that the image processing software have enough significant points for positioning and parametrizing them spatially in an unmistakable manner.
   In other words, due to their small dimensions, the marker elements which are coupled to the part screwed onto the jaw have significant points very close to one another which, while they would allow spatially positioning a small element, such as an implant, for example, in an unequivocal manner, they are not sufficient for unmistakably positioning anything of a much larger size such as the case of an entire jaw. For this reason, the combined use of several of these markers is required.
   This evidently causes significant discomfort for the patient who must suffer the presence of said elements for an often lengthy period of time.
   It would therefore be extremely desirable to be able to minimize as much as possible the number of elements that must be implanted in the patient's jaw.
- On the other hand, as has already been explained, for a correct alignment or superimposition of the digital files using software, it is essential for the marker elements to be spatially positioned in an unequivocal manner which, in the case of the mentioned documents of the state of the art, means that every time these elements are coupled to the element screwed onto the jaw, they must be coupled in exactly the same way and in the same position. However, none of said documents mentions this need. Only patent document ES2605052 describes that the coupling between both elements must be such that, once performed, it should prevent the relative movement between both elements, which does not prevent both elements in said coupling from being positioned with respect to one another in the exact same position in which they were placed during the preceding scan, tomography or image capture, nor will they remain in the same position in subsequent examinations.

Therefore, there is a need to obtain an element for the spatial positioning of jaws during dental treatments which, while being minimally invasive, allows remaining screwed onto the bone bed of the patient's jaw in the exact same position and for a long time during which different images or digital files of said jaw can be obtained such that they can be compared and/or aligned or superimposed with respect to one another over time in an unequivocal manner.

In other words, an element which, once placed in the patient's jaw, always remains in the same spatial position is required so that all the scans attained for said jaw will thereby always contain this element in the same position, regardless of the changes occurring in said jaw throughout the time of treatment, such as for example, movements of the teeth, extractions, placement of implants, removal of dental prostheses, presence of new dental prostheses, etc. The fact that this element is always present in the same position means that all these different files which have gone through morphological changes, except in the placed element which remains in the same position, can be linked and superimposed and the information contained in these different files can be shared and used in the dental laboratory design process.

US 2015/147725 A1 discloses a system comprising an screw implant and a scan abutment, wherein the connection between the implant and the scan abutment comprises an indexing feature.

### Description of the Invention

The system of the present invention solves the aforementioned problems of the state of the art as it constitutes a work element that is essential for establishing the unequivocal spatial positioning of the jaw and/or of any element of the patient's mouth that is contained therein over time, all of this furthermore with minimum discomfort for the patient.

This allows being able to combine the information obtained in any digital imaging technique, for example stereophotogrammetry and/or intraoral scanning, performed during the weeks or months that a dental treatment lasts. For example, it allows copying the digital image obtained in any of the scans to another one of the scans, i.e., copying in the image of the last scan some or all the other digital images obtained in preceding scans, for the purpose of obtaining an image including modifications that any part of the patient's mouth such as the teeth, soft tissues, presence of new implants and/or prostheses, etc., has undergone throughout that entire time.

Even more specifically, the computer-assisted design (CAD) software operator marks, on one of the obtained digital images, a series of characterizing points located on a specific site of the system for establishing the spatial positioning of jaws during dental treatments of the invention. Subsequently, for combining said image with another new one, this new image must also allow marking the same points on the system to thereby superimpose, align or perform the best-fit of both images and combine them. In other words, to be able to combine images it will be required for all of them to have the same system and for this system to always be placed in the same position for performing said combination with the same points being indicated in all of them.

The present invention relates to a system as defined by the appended claims.

Specifically, the special shape and dimensions of the claimed system allow the software technician to be able to position, on the digital image obtained therefrom, all the characterizing points required for being able to fuse, with only one of said abutments per jaw, different images of the jaw captured over time, while said system remained inserted in the mouth of said patient.

Where the screw and the abutment comprise removable coupling means for coupling to one another which, on one hand, allow a non-permanent attachment between both, and on the other hand, allow both parts in said attachment to always be positioned exactly the same with respect to one another, i.e., the attachment is always done in one and the same unequivocal position.

Therefore, a possible workflow in which the system for establishing the spatial positioning of the jaw of the invention is used may be as follows:
a) Placing the screw by means of its self-tapping part in the patient's upper or lower jaw, and then coupling the abutment to the screw.
b) Capturing data of the patient's mouth by means of any system capable of generating digital images, for example, through an intraoral scan or stereophotogrammetry, obtaining a file or group of digital files E1.
c) Removing the abutment but keeping the screw inserted in the patient's jaw.
d) After some time which can be days, weeks or months, coupling the abutment to the screw again to then perform a new scan or stereophotogrammetry and obtain a new file or group of digital files E2 that can be aligned, combined or linked with those obtained previously.
e) Repeating the preceding steps c) and d) as many times as necessary.
f) Removing the screw from the patient's mouth.

Once the different digital files E1, E2,... En, of the patient's mouth obtained as a result of the system of the invention, said files can already be combined by means of the suitable software tools, thereby creating a digital work file comprising all the required information.

Specifically, the laboratory software performs the alignment, superimposition or combination of all the generated files E1, E2, etc., i.e., of the digital images of the patient's jaw obtained over time as a result of the unequivocal characterizing points provided by the abutment in each image.

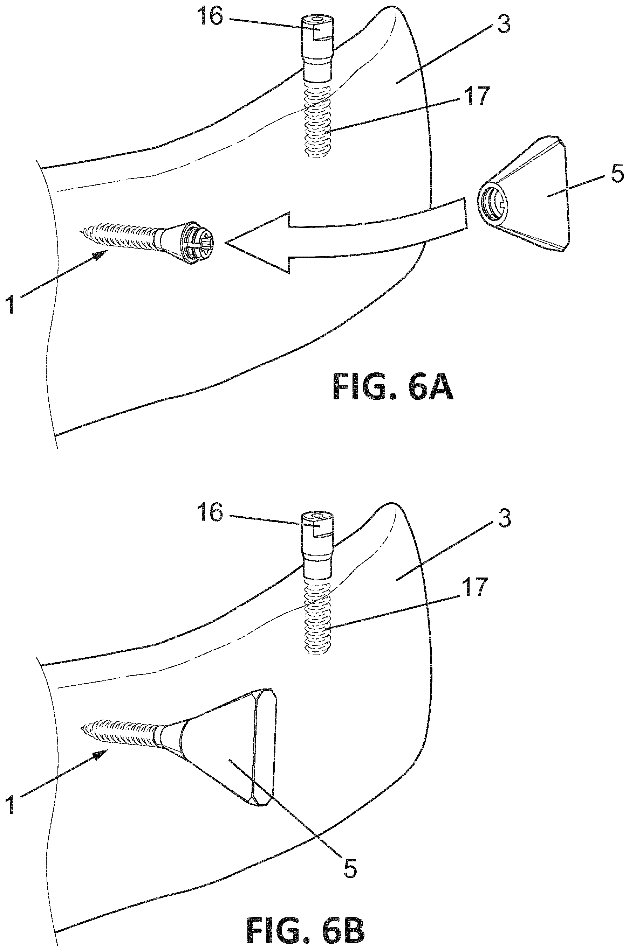

Finally, some examples of applications of the present invention are as follows:
- The making of immediate prosthesis in completely edentulous patients. By placing the system of the invention in the patient's jaw, an intraoral scanning is performed with the patient's prostheses (removable, complete, etc.). The prostheses are then removed and the implants are placed by removing the abutment but leaving the self-tapping screw in the same position. Subsequently, as schematically shown in Figures 6A and 6B, a new intraoral scanning is performed by placing scanbodies (16) on the implants (17) and the abutment on the screw.
   Two digital files having the system of the invention in the same position are thereby obtained, so both files can be superimposed and the morphology, vertical dimension and occlusion of the earlier prostheses of the patient can be copied in the new prosthesis that will be retained or supported on the implants.
- Copying of prostheses on the implants or natural teeth.
   This is performed in patients having either provisional or definitive fixed dental prostheses.
   Either due to the fact that, like in the previous case, the primary tooth has already been placed (once the initial prosthesis is placed on the implants) or else due to the fact that treatment is started at this time, placing the system of the invention for first time, it will allow performing a first scan with the fixed prostheses in place and another scan after treatment which is performed at that time, for example, by scanning the implants by means of scanbodies, placing new implants and new scanbodies, which thereby allows superimposing the files and copying the information that is required from the first file in the next one.
- Partial or complete multiple extractions and placement of implants:
   The system of the invention, screw and abutment, is placed before performing extractions and a first scan of the patient's jaw is then performed, subsequently removing the abutment. Extractions are then performed, the implants are placed and the scanbodies are placed on said implants. The abutment is then placed on the screw again and a new scan is performed. The digital images obtained can be combined and superimposed so that the laboratory technician only has to copy the morphology of the teeth present in the first file when designing the teeth that will go on the implants, the prosthesis, greatly simplifying the design process and making it completely precise since it copies the previous functional situation of the patient without having to imagine anything since it has all the information it requires to make a perfect design.
- Periodontics with bone regeneration.
   Due to the deficient bone anchoring of natural teeth affected by a periodontal disease, monitoring the progression of the teeth as regards their movement in the jaw is fundamental. This is not possible by means of the exclusive use of the intraoral scanner because given that teeth move, they are not in the same position in the different scans, which prevents superimposing the files based only on the teeth or gum.
   The presence of the system of the invention in all these scans allows readily superimposing all the obtained images and thereby using the information that each of them contains to check the progression and the treatment result.
- Dentistry
   The use of the system of the invention throughout the entire dental treatment allows quantifying dental movement and thereby comparing the development thereof in a progressive manner. Specifically, in these cases the technique is performed by placing an system of the invention in each lower and upper jaw, which at the same time allows not only checking the progression of dental movement but also the actual progression of the mobility of each jaw as a whole and the modifications which are obtained in the actual occlusion of the patient's mouth.
- Fixed prosthesis on a natural tooth
   When carving all the teeth of a jaw, the system of the invention is placed and the teeth are carved. All the prior references of the patient are therefore lost. To prevent this, by leaving the system of the invention in place, a model known in the art as a mock-up ismade on the carved teeth. Specifically, this is done using a composite-type material, with which the teeth thereof are overlaid, using a silicone key of a previous esthetic wax-up system (the esthetic wax-up system is made prior to treatment and contains the morphological and esthetic information to be achieved in the definitive treatment), then proceeding to scan the teeth thus overlaid, the jaw containing the same system of the invention, in the same position maintained in the file of the scanning with the carved teeth. In this manner and as a result of the presence of the system of the invention in the same position, both files can be superimposed and the information of the esthetic wax-up system can be copied to the definitive treatment.

### Description of the Drawings

To complement the description that is being made and for the purpose of aiding to better understand the features of the invention, a set of drawings is attached as an integral part of said description in which the following has been depicted with an illustrative and non-limiting character:
Figure 1 shows an exploded perspective view of the system for establishing the spatial positioning of jaws during dental treatments of the invention in which both the self-tapping screw and the abutment can be seen.
Figure 2 shows a perspective view of the abutment in which the coupling means for coupling to the head of the screw are seen.
Figure 3 shows a perspective view of the system of the invention when the abutment is coupled to the screw.
Figure 4A shows a schematic perspective view in which the head of the screw is seen screwed onto the patient's jaw in the step before the abutment is coupled thereon.
Figure 4B shows the view of the preceding figure in which the abutment has already been coupled on the head of the screw.
Figure 5 shows a bottom plan view of the preceding figure where the manner in which the system of the invention is positioned on the patient's jaw can be seen, including with a discontinuous line the position of the self-tapping end of the screw.
Figure 6A shows a new schematic perspective view in which the screw is seen screwed onto the patient's jaw still without the abutment coupled thereon and in which an implant having a conventional scanbody coupled thereto is also seen.
Figure 6B shows the view of the preceding figure in which the abutment has already been coupled on the head of the screw.

### Preferred Embodiment of the Invention

In view of the invention described above, an embodiment of the invention is described below.

Specifically, according to an embodiment shown in the drawings, the system for establishing the spatial positioning of jaws during dental treatments of the invention comprises:
- a screw (1) with a self-tapping end (2) intended for being inserted into the patient's jaw (3), and at the other end thereof, a head (4) in turn comprising, both the coupling means for coupling to the abutment (5) that is described below, and the hole (6) used for housing the implement or tool used by the dentist or surgeon to perform screwing.

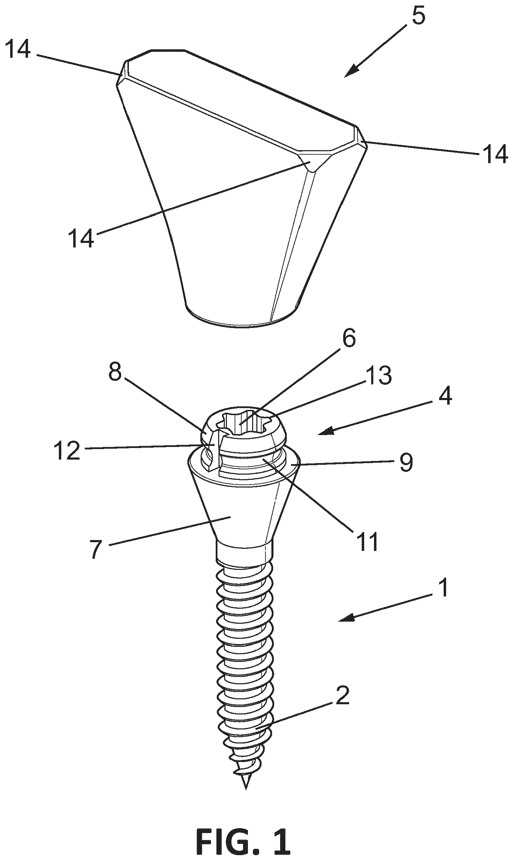

More specifically, according to a preferred embodiment of the invention shown in Figure 1, said head (4) comprises in its lower part a frustoconical portion (7) and in its upper part a body (8) having rounded edges which accommodates both the coupling means for coupling to the abutment (5) and the mentioned hole (6).

As regards said frustoconical portion (7), it has a smaller base through which it is attached to the threaded part of the screw (1) with a diameter similar to said threaded part, a diameter that increases as it moves away from said self-tapping end (2) until forming the larger base.

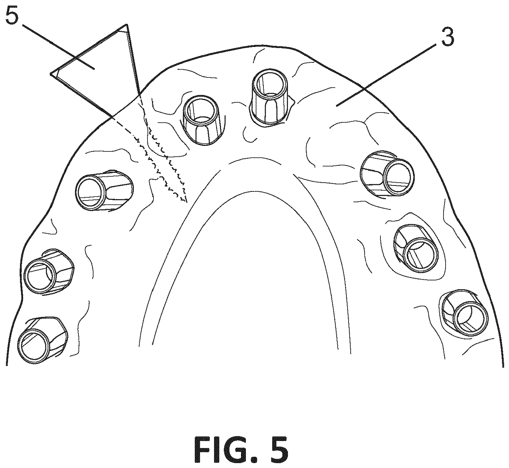

As can be schematically seen in Figure 5, said frustoconical shape fulfills the function of preventing the head from being introduced into the bone bed due to excessive screwing of the screw, and although not depicted in the drawings, the outer side surface thereof can furthermore have a rough or ribbed finish in order to both hamper excessive screwing and prevent the rotational movement thereof once it is implanted in the jaw (3), thereby helping to fix its position for the entire time that said screw is screwed in the patient.

On the other hand, as seen in the drawings, particularly in Figure 1, the body (8) having rounded edges can have, for example, a toroidal shape, that is fixed on the larger base of the frustoconical portion (7) and has a maximum diameter having smaller dimensions than the diameter of the larger base, such that it is located in an inner, concentric position with respect to same, defining a free circular crown (9) on said larger base resulting from the difference between both diameters.

Said circular crown (9) helps to prevent the soft tissue of the patient from possible injury when the screw is inserted into their jaw (3), in addition to the fact of the body (8) having the already mentioned rounded edges. Likewise, the rounded edges of the body (8) are complemented with an upper circumferential bevel acting like a tutor guide to make coupling of the abutment (5) easier.

On the other hand, said body (8) further comprises both the coupling means for coupling to the abutment (5) and the hole (6) used for housing the implement or tool used by the dentist or surgeon to perform screwing.

In relation to the above, according to the example shown in the drawings the hole is a Torx-type hole (6), so it will be required to have an implement or tool that is compatible with this type of connection to perform screwing.

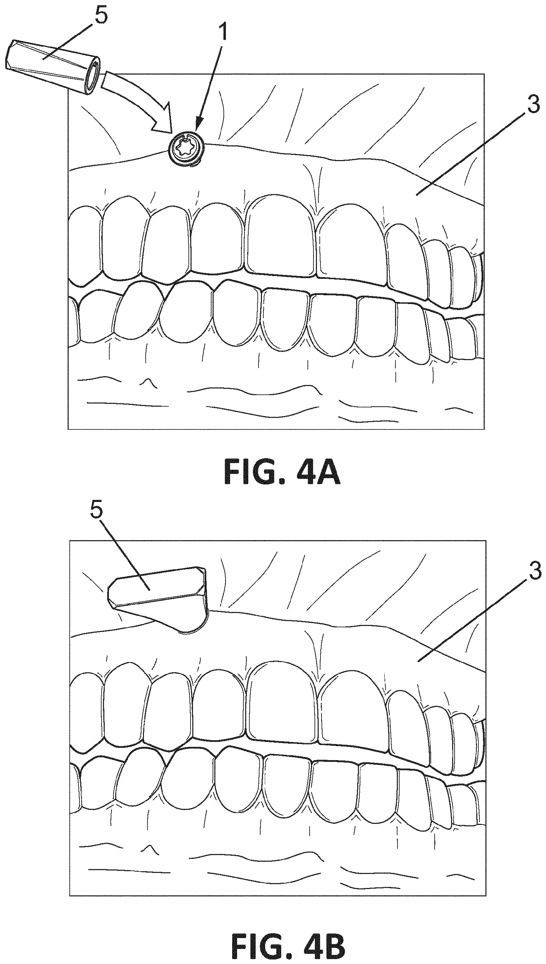

As regards the coupling means for coupling to the abutment (5), these comprise:
∘ A retention system (11) cooperating with the corresponding retention system (11') present in the abutment (5).
   According to a possible embodiment shown in the drawings, said retention system (11) is made as a male-and-female type retention system, and more specifically, as a semicircular circumferential recess forming a perimetral channel having rounded edges in order to not injure the surface of the patient's body (8), thereby forming the female part of said system in which the corresponding male part of the retention system (11') present in the abutment (5) as a snap-fit fastener will be fitted.
   This retention system will be strong enough to, on one hand, assure the attachment of the screw (1) and the abutment (5) when digital images are being captured, but are on the other hand readily removable by hand when the dentist or surgeon decides to remove the abutment (5).
∘ An unequivocal positioning system (12) cooperating with the corresponding unequivocal positioning system (12') present in the abutment (5).
   Said unequivocal positioning system (12, 12') allows for the screw (1) and the abutment (5) to always be positioned exactly the same with respect to one another when they are coupled, i.e., it prevents the dentist or surgeon from being able to perform coupling in a position that is not the predetermined one, thereby preventing different digital images, when they are generated over time, from not being able to be superimposed due to the position of the abutment (5) not coinciding with the jaw (3). This is schematically shown in Figures 4A and 4B. According to a possible embodiment shown in the drawings, said unequivocal positioning system (12) present in the body (8) is formed as a vertical groove having a polygonal cross-section, parallel to the longitudinal axis of the screw, made at a point of the periphery of said body (8) and having a depth greater than the depth of the circumferential recess forming the retention system (11) but not intersecting at any point with the hole (6) for housing the implement or tool and thereby preventing weak points that may give rise to breakage when the screw-in torque is applied.
   Therefore, more specifically, as can be seen in Figure 1, for the case in which the hole (6) has the shape of a Torx-type connection, said vertical groove is located right between two of its ridges (13) so that there is a sufficient amount of material between it and the hole (6) to prevent weak points in the structure.

- An abutment (5) which, on one hand, comprises coupling means for coupling to the screw (1) described above, and on the other hand, has a shape such that the abutment itself, i.e., without requiring the presence of more abutments, allows for the patient's jaw (3) to be spatially positioned in a geometric manner.

Specifically, the abutment (5) is formed as a body comprising a smaller base and a larger base such that the coupling means for coupling to the screw (1) are housed in the smaller base, and where said larger base:
- has an area which is at least twice the area enclosed by the perimeter of the smaller base; and
- comprises at least three notches (14) on its perimetral edge such that two of them are located at the two points of said perimetral edge farthest away from one another.

Said notches (14) will therefore form some other points on which the computer-assisted design software operator can locate the significant geometric points for spatially positioning in an unmistakable manner the digital image obtained by means of a digital scanner or stereophotogrammetry, and can thereby combine all the obtained images in which the abutment (5) is present.

More specifically, as shown in the preferred embodiment shown in the drawings, particularly Figures 1 to 3, the abutment (5) has a general truncated pyramid shape with a smaller base having a circular cross-section and a larger base having a polygonal cross-section in which said notches (14) are formed by three of its truncated vertices, which will in turn form many other small-sized planes that will allow the software operator to locate the significant geometric points thereon.

Continuing with the example of the drawings and as mentioned above, for establishing a correct spatial positioning of the patient's entire jaw said points must be separated from one another as much as possible, so at least two of the truncated vertices on which said points will be digitally located must also be located as far away as possible from one another. Nevertheless, taking into account that the abutment (5) must be located on the patient's jaw (3) throughout the duration of the image capture, and that it therefore cannot be so large so as to cause discomfort to said patient, or that it must not hinder actually capturing the images of said jaw (3) either, its shape and size cannot be just any shape and size for the separation between its truncated vertices is the maximum.

For that reason, according to a preferred embodiment of the invention shown in the drawings, the ideal size:shape ratio is achieved with an abutment the larger base of which is rectangular, i.e., with a general rectangular pyramid shape where at least the larger base thereof is rectangular to assure that at least two of the truncated vertices of said larger base are separated as much as possible in said base due to the location thereof at the ends of one of its two diagonals. Nevertheless, in the example shown in the drawings a pyramid with its larger base formed by a rectangle having its four vertices truncated is shown.

Even more specifically, it is established that the distance between two of the truncated vertices arranged in the same diagonal is not smaller than twice the diameter of the larger base of the frustoconical portion (7), and preferably not less than 10 mm.

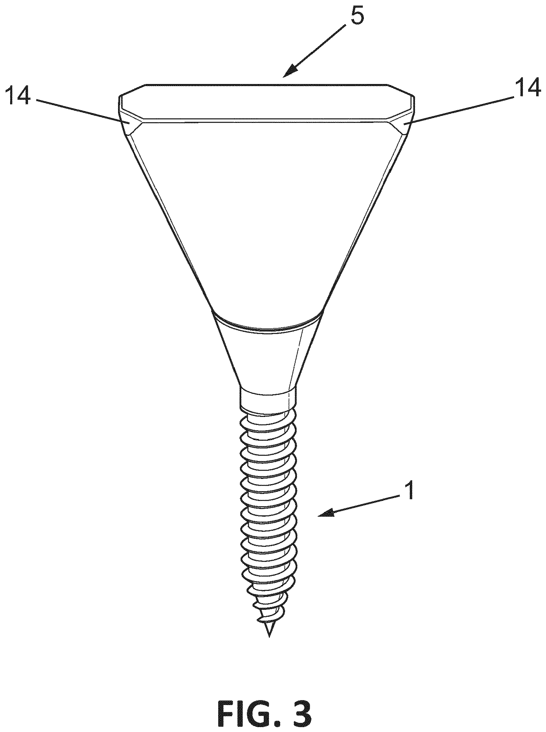

On the other hand, according to the embodiment shown in the drawings, while the larger base of the abutment has a rectangular shape, the smaller base has a circular cross-section such that, as can be seen in Figure 3, the transition between the abutment (5) and frustoconical portion (7) of the screw (1) when they are both coupled to one another occurs without there being projecting elements or edges that may injure the patient. Therefore, for this case, the abutment will have a small frustoconical or cylindrical portion which will extend, after a certain height, forming said rectangular pyramid.

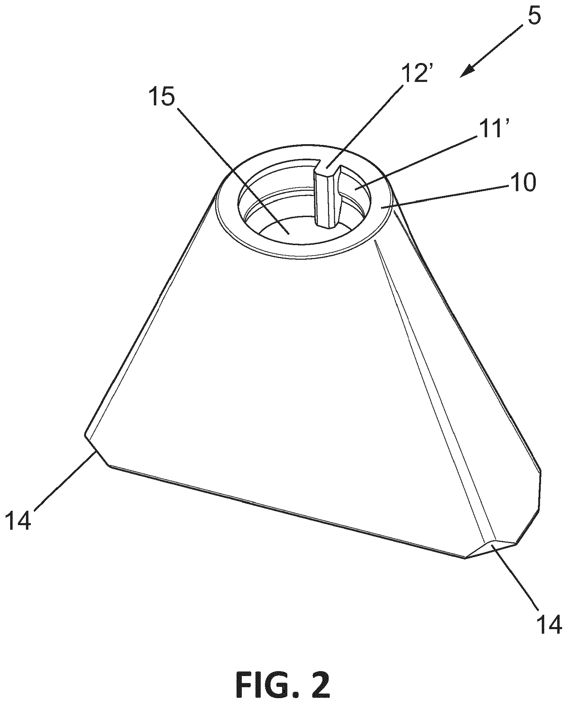

As regards the coupling means for coupling to the screw (1) shown in Figure 2, they are located inside a cylindrical cavity (15) which can be accessed through the smaller base and is intended for accommodating the body (8) of the screw (1), where said housing means comprise:
∘ A retention system (11') cooperating with the corresponding retention system (11') present in the screw (1).
   According to a possible embodiment shown in the drawings, said retention system (11') is formed as a male-and-female retention system, and more specifically as a semicircular circumferential protuberance forming a perimetral thickening having rounded edges on the inner surface of said cavity (15), thereby forming the male part of the retention system (11') that will be fitted as a snap-fit fastener in the corresponding female part of the retention system (11) present in the screw (1).
   As mentioned above, this retention system will be strong enough to, on one hand, assure the attachment of the screw (1) and the abutment (5) when digital images are being captured, but on the other hand allow easy separation or removal by hand when the dentist or surgeon decides to remove the abutment (5).
∘ An unequivocal positioning system (12') cooperating with the corresponding unequivocal positioning system (12) present in the screw (1).
   As mentioned above, said unequivocal positioning system (12, 12') allows the screw (1) and the abutment (5) to always be positioned exactly the same with respect to one another when they are coupled, such that the different digital images, when they are generated over time, can be superimposed on one another.
   According to a possible embodiment shown in the drawings, particularly in Figure 2, said unequivocal positioning system (12') present on the inner surface of said cavity (15) is formed as a vertical projection having a polygonal cross-section and a radial arrangement with respect to the smaller base which is intended for being housed in the complementary vertical groove present in the body (8) of the screw (1).
   On the other hand, as can be seen in Figure 2, the smaller base of the abutment having the cavity (15) comprises a support area (10) or base itself, the shape and dimensions of which coincide with the circular crown (9) present in the larger base of the frustoconical portion (7) of the head (4) of the screw (1) and intended for being supported thereon.
   Therefore, as mentioned above, the transition between the abutment (5) and the frustoconical portion (7) of the screw (1) when they are both coupled to one another occurs continuously and without there being projecting elements or edges which may injure the patient.

Finally, according to a possible preferred embodiment, the screw (1) of the invention has a total length of 14.5 mm from the tip of its self-tapping end (2) to the upper part of the body (8). On the other hand, the frustoconical portion (7) has a length of 3 mm with a smaller base of 2 mm in diameter, identical to the outer diameter of the thread, and a larger base of 4 mm. In turn, the body (8) has a height of 1.5 mm and a diameter of 3 mm at the point at which it is supported on the circular crown (9), so said circular crown has a constant width of 1 mm. On the other hand, the vertical groove present in the body (8) has a height equal to the height of said body, i.e., 1.5 mm and the circumferential recess forming the retention system (11) has a height of 0.7 mm.

As regards the abutment, according to that same preferred embodiment, it has a height between its larger and smaller bases of 8 mm, a smaller base of 4 mm and a cavity (15) with an internal diameter of 3 mm for fitting on the body (8). Finally, the larger rectangular base has two smaller faces of 3 mm and two larger faces of 10.6 mm.

While the screw (1) must be made from a biocompatible material, such as for example, titanium or Cr-Co alloys, the abutment (5) will preferably be made from a material that is also biocompatible, preferably a PEEK-type thermoplastic polymer.

Finally, according to another possible embodiment, the abutment (5) can be made or can comprise parts of a radiopaque material for those cases in which the digital image to be processed is obtained by means of a radio diagnostic apparatus.

## Claims

1. System for establishing the spatial positioning of jaws during dental treatments, comprising:
- a screw (1) with a self-tapping end (2) and a head (4), and
- an abutment (5) with a series of characterizing points, said points allowing to combine different images of the jaw captured over time,
wherein both the screw (1) and the abutment (5) comprise coupling means for coupling to one another, wherein said coupling means in turn comprise:
- a removable retention system (11, 11') between the screw (1) and the abutment (5), and
- an unequivocal positioning system (12, 12') such that the screw (1) and the abutment (5) are always positioned exactly the same with respect to one another when they are coupled and such that it prevents relative movements from occurring between them once they are coupled,
**characterized in that** the abutment (5) comprises:
- a smaller base having a cavity (15) inside which the coupling means for coupling to the screw (1) are located, and
- a larger base, wherein said larger base:
- has an area which is at least twice the area enclosed by the perimeter of the smaller base; and
- comprises at least three notches (14) on its perimetral edge such that two of them are located at the two points of said perimetral edge farthest away from one another.

2. System for establishing the spatial positioning of jaws during dental treatments according to claim 1, **characterized in that** the head (4) of the screw (1) comprises:
- in its lower part, a frustoconical portion (7) with a smaller base and a larger base, and
- in its upper part, fixed on the larger base of the frustoconical portion (7), a body (8) having rounded edges, the body (8) accommodating the coupling means for coupling to the abutment (5) and a hole (6) for housing the implement or tool that performs screwing.

3. System for establishing the spatial positioning of jaws during dental treatments according to claim 1 or 2, **characterized in that** the abutment (5) has a truncated pyramid shape, where the larger base thereof has a polygonal cross-section and has at least three of the vertices thereof truncated, forming the notches (14).

4. System for establishing the spatial positioning of jaws during dental treatments according to claim 3, **characterized in that** the larger base of the abutment (5) has a rectangular shape.

5. System for establishing the spatial positioning of jaws during dental treatments according to claim 3 or 4, **characterized in that** the distance between two truncated vertices arranged on the same diagonal is not smaller than twice the diameter of the larger base of the frustoconical portion (7) on which the abutment (5) is coupled.

6. System for establishing the spatial positioning of jaws during dental treatments according to any of the preceding claims 1 to 5, **characterized in that** the smaller base of the abutment (5) has a circular cross-section.

7. System for establishing the spatial positioning of jaws during dental treatments according to any of the preceding claims, **characterized in that** the retention system (11, 11') is formed as a male-and-female-type snap-fit fastener, such that the female part is located in the body (8) of the head (4) of the screw (1) and the male part is located in the abutment (5).

8. System for establishing the spatial positioning of jaws during dental treatments according to claim 7, **characterized in that** the female part of the snap-fit fastener of the retention system (11) is formed by a semicircular and circumferential recess forming a perimetral channel and the corresponding male part of the retention system (11') is formed by a semicircular and circumferential protuberance forming a perimetral thickening.

9. System for establishing the spatial positioning of jaws during dental treatments according to any of the preceding claims, **characterized in that** a first part (12) of the unequivocal positioning system present in the screw (1) is formed as a vertical groove having a polygonal cross-section, parallel to the longitudinal axis of said screw (1) and made at a point of the periphery of the body (8), and a second part (12') of the unequivocal positioning system present on the inner surface of the cavity (15) of the abutment (5) is formed as a vertical projection having a polygonal cross-section and radial arrangement with respect to the smaller base of said abutment (5)

10. System for establishing the spatial positioning of jaws during dental treatments according to claim 9, **characterized in that** the vertical groove made at a point of the periphery of the body (8) has a depth greater than the depth of the circumferential recess forming the retention system (11) but does not intersect with a hole (6) for housing the implement or tool at any point.

11. System for establishing the spatial positioning of jaws during dental treatments according to any of the preceding claims 2 to 10, **characterized in that** the body (8) has a toroidal shape, and **in that** it has a maximum diameter having smaller dimensions than the diameter of the larger base of the frustoconical portion (7), forming a circular crown (9) thereon.

12. System for establishing the spatial positioning of jaws during dental treatments according to claim 11, **characterized in that** a smaller base of the abutment (5) comprises a circular crown-shaped support area (10) the shape and dimensions of which coincide with the circular crown (9).

## Patentansprüche

1. System zum Festlegen der räumlichen Positionierung des Kiefers während Zahnbehandlungen, umfassend:
- eine Schraube (1) mit einem selbstschneidenden Ende (2) und einem Kopf (4) und
- ein Widerlager (5) mit einer Reihe von charakterisierenden Punkten, wobei die Punkte verschiedene Abbilder des Kiefers, welche über die Zeit erfasst werden, zu kombinieren erlauben,
wobei sowohl die Schraube (1) als auch das Widerlager (5) Kopplungsmittel zum Miteinanderkoppeln umfassen, wobei die Kopplungsmittel ihrerseits umfassen:
- ein lösbares Haltesystem (11, 11') zwischen der Schraube (1) und dem Widerlager (5) und
- ein eindeutiges Positionierungssystem (12, 12') derart, dass die Schraube (1) und das Widerlager (5) stets genau gleich zueinander positioniert sind, wenn sie gekoppelt sind, und derart, dass ein Auftreten von Relativbewegungen zwischen diesen verhindert wird, sobald sie gekoppelt sind,
**dadurch gekennzeichnet, dass** das Widerlager (5) umfasst:
- eine kleinere Basis, welche einen Hohlraum (15) aufweist, in dem sich die Kopplungsmittel zur Kopplung mit der Schraube (1) befinden, und
- eine größere Basis, wobei die größere Basis:
- eine Fläche aufweist, welche mindestens das Zweifache der vom Umfang der kleineren Basis eingeschlossenen Fläche beträgt; und
- mindestens drei Kerben (14) an ihrem Umfangsrand aufweist derart, dass sich zwei derselben an den beiden Punkten des Umfangsrandes befinden, welche am weitesten voneinander entfernt sind.

2. System zum Festlegen der räumlichen Positionierung des Kiefers während Zahnbehandlungen nach Anspruch 1, **dadurch gekennzeichnet, dass** der Kopf (4) der Schraube (1) umfasst:
- in seinem unteren Teil einen kegelstumpfförmigen Bereich (7) mit einer kleineren Basis und einer größeren Basis und
- in seinem oberen Teil, an der größeren Basis des kegelstumpfförmigen Bereichs (7) fixiert, einen Körper (8), welcher gerundete Kanten aufweist, wobei der Körper (8) die Kopplungsmittel zum Koppeln mit dem Widerlager (5) und ein Loch (6) zum Aufnehmen des Geräts oder Werkzeugs, welches einen Verschraubungsvorgang durchführt, aufnimmt.

3. System zum Festlegen der räumlichen Positionierung des Kiefers während Zahnbehandlungen nach Anspruch 1 oder 2, **dadurch gekennzeichnet, dass** das Widerlager (5) die Form eines Pyramidenstumpfes aufweist, wobei dessen größere Basis einen polygonalen Querschnitt aufweist und an mindestens drei ihrer Eckpunkte abgeschnitten ist, so dass die Kerben (14) gebildet sind.

4. System zum Festlegen der räumlichen Positionierung des Kiefers während Zahnbehandlungen nach Anspruch 3, **dadurch gekennzeichnet, dass** die größere Basis des Widerlagers (5) eine rechteckige Form aufweist.

5. System zum Festlegen der räumlichen Positionierung des Kiefers während Zahnbehandlungen nach Anspruch 3 oder 4, **dadurch gekennzeichnet, dass** der Abstand zwischen zwei abgeschnittenen Eckpunkten, welche auf derselben Diagonale liegen, nicht kleiner ist als der zweifache Durchmesser der größeren Basis des kegelstumpfförmigen Bereichs (7), an den das Widerlager (5) gekoppelt ist.

6. System zum Festlegen der räumlichen Positionierung des Kiefers während Zahnbehandlungen nach einem der vorangehenden Ansprüche 1 bis 5, **dadurch gekennzeichnet, dass** die kleinere Basis des Widerlagers (5) einen kreisförmigen Querschnitt aufweist.

7. System zum Festlegen der räumlichen Positionierung des Kiefers während Zahnbehandlungen nach einem der vorangehenden Ansprüche, **dadurch gekennzeichnet, dass** das Haltesystem (11, 11') als Schnappverbinder vom Männlich/Weiblich-Typ ausgebildet ist derart, dass der weibliche Teil in dem Körper (8) des Kopfes (4) der Schraube (1) und der männliche Teil in dem Widerlager (5) angeordnet ist.

8. System zum Festlegen der räumlichen Positionierung des Kiefers während Zahnbehandlungen nach Anspruch 7, **dadurch gekennzeichnet, dass** der weibliche Teil des Schnappverbinders des Haltesystems (11) von einer halbkreisförmigen und umlaufenden Ausnehmung gebildet ist, welche einen Umfangskanal bildet, und dass der korrespondierende männliche Teil des Haltesystems (11') von einer halbkreisförmigen und umlaufenden Wulst gebildet ist, welche eine Umfangsverdickung bildet.

9. System zum Festlegen der räumlichen Positionierung des Kiefers während Zahnbehandlungen nach einem der vorangehenden Ansprüche, **dadurch gekennzeichnet, dass** ein erster Teil (12) des eindeutigen Positionierungssystems, welcher in der Schraube (1) vorhanden ist, als eine vertikale Nut polygonalen Querschnitts ausgebildet ist, welche parallel zu der Längsachse der Schraube (1) verläuft und an einem Punkt der Peripherie des Körpers (8) hergestellt ist, und dass ein zweiter Teil (12') des eindeutigen Positionierungssystems, welcher an der inneren Oberfläche des Hohlraums (15) des Widerlagers (5) vorhanden ist, als ein vertikaler Vorsprung ausgebildet ist, welcher einen polygonalen Querschnitt aufweist und bezüglich der kleineren Basis des Widerlagers (5) radial angeordnet ist.

10. System zum Festlegen der räumlichen Positionierung des Kiefers während Zahnbehandlungen nach Anspruch 9, **dadurch gekennzeichnet, dass** die an einem Punkt der Peripherie des Körpers (8) hergestellte vertikale Nut eine Tiefe aufweist, welche größer ist als die Tiefe der das Haltesystem (11) bildenden umlaufenden Ausnehmung, sich jedoch an keinem Punkt mit einem Loch (6) zur Aufnahme des Geräts oder Werkzeugs schneidet.

11. System zum Festlegen der räumlichen Positionierung des Kiefers während Zahnbehandlungen nach einem der vorangehenden Ansprüche 2 bis 10, **dadurch gekennzeichnet, dass** der Körper (8) eine toroidale Form aufweist und dass er einen maximalen Durchmesser aufweist, welcher kleinere Abmessungen aufweist als der Durchmesser der größeren Basis des kegelstumpfförmigen Bereichs (7), so dass er eine kreisförmige Krone (9) darauf bildet.

12. System zum Festlegen der räumlichen Positionierung des Kiefers während Zahnbehandlungen nach Anspruch 11, **dadurch gekennzeichnet, dass** eine kleinere Basis des Widerlagers (5) einen kreisförmigen, kronenförmigen Auflagebereich (10) umfasst, dessen Form und Abmessungen mit der kreisförmigen Krone (9) übereinstimmen.

## Revendications

1. Système destiné à l'établissement du positionnement de mâchoires dans l'espace au cours de traitements dentaires, qui comprend:
- une vis (1) équipée d'une extrémité autotaraudeuse (2) et d'une tête (4) ; et
- une butée (5) qui comprend une série de points de caractérisation, les points en question permettant de combiner différentes images de la mâchoire capturées au cours du temps ;
dans lequel à la fois la vis (1) et la butée (5) comprennent des moyens d'accouplement qui sont destinés à s'accoupler l'un à l'autre, dans lequel lesdits moyens d'accouplement comprennent à leur tour :
- un système de rétention amovible (11, 11') entre la vis (1) et la butée (5) ; et
- un système de positionnement univoque (12, 12') d'une manière telle que la vis (1) et la butée (5) sont toujours positionnées exactement de la même façon l'une par rapport à l'autre lorsqu'elles sont accouplées et d'une manière telle qu'il empêche l'apparition de mouvements relatifs entre elles, une fois qu'elles sont accouplées ;
**caractérisé en ce que** la butée (5) comprend :
- une base plus petite qui possède une cavité (15) à l'intérieur de laquelle sont disposés les moyens d'accouplement destinés à s'accoupler à la vis (1) ; et
- une base plus grande, dans laquelle ladite base plus grande :
- possède une zone qui représente au moins deux fois la zone délimitée par le périmètre de la base plus petite ; et
- comprend au moins trois encoches (14) sur son bord périmétrique d'une manière telle que deux d'entre elles sont situées aux deux points dudit bord périmétrique, qui sont les plus éloignés l'un de l'autre.

2. Système destiné à l'établissement du positionnement de mâchoires dans l'espace au cours de traitements dentaires, conformément à la revendication 1, **caractérisé en ce que** la tête (4) de la vis (1) comprend :
- dans sa partie inférieure, une portion de forme tronconique (7) qui possède une base plus petite et une base plus grande ; et
- dans sa partie supérieure, qui est fixée à la base plus grande de la portion de forme tronconique (7), un corps (8) qui possède des bords arrondis, les moyens d'accouplement qui sont destinés à s'accoupler à la butée (5), ainsi qu'un trou (6) destiné au logement de l'accessoire ou de l'outil qui met en œuvre le vissage, étant logés dans le corps (8).

3. Système destiné à l'établissement du positionnement de mâchoires dans l'espace au cours de traitements dentaires, conformément à la revendication 1 ou 2, **caractérisé en ce que** la butée (5) possède une configuration en forme de pyramide tronquée, dans laquelle la base plus grande de cette dernière possède une section transversale de forme polygonale et possède au moins trois des sommets tronqués de cette dernière qui forment les encoches (14).

4. Système destiné à l'établissement du positionnement de mâchoires dans l'espace au cours de traitements dentaires, conformément à la revendication 3, **caractérisé en ce que** la base plus grande de la butée (5) possède une configuration de forme rectangulaire.

5. Système destiné à l'établissement du positionnement de mâchoires dans l'espace au cours de traitements dentaires, conformément à la revendication 3 ou 4, **caractérisé en ce que** la distance entre deux sommets tronqués qui sont disposés sur la même diagonale n'est pas inférieure à deux fois le diamètre de la base plus grande de la portion de forme tronconique (7) à laquelle est accouplée la butée (5).

6. Système destiné à l'établissement du positionnement de mâchoires dans l'espace au cours de traitements dentaires, conformément à l'une quelconque des revendications précédentes 1 à 5, **caractérisé en ce que** la base plus petite de la butée (5) possède une section transversale de forme circulaire.

7. Système destiné à l'établissement du positionnement de mâchoires dans l'espace au cours de traitements dentaires, conformément à l'une quelconque des revendications précédentes, **caractérisé en ce que** le système de rétention (11, 11') est réalisé sous la forme d'un dispositif de fixation par encliquetage du type mâle et femelle, d'une manière telle que la partie femelle est située dans le corps (8) de la tête (4) de la vis (1) et la partie mâle est située dans la butée (5).

8. Système destiné à l'établissement du positionnement de mâchoires dans l'espace au cours de traitements dentaires, conformément à la revendication 7, **caractérisé en ce que** la partie femelle du dispositif de fixation par encliquetage du système de rétention (11) est réalisée par l'intermédiaire d'un évidement semi-circulaire et circonférentiel qui forme un canal périmétrique et la partie mâle correspondante du système de rétention (11') est réalisée par l'intermédiaire d'une protubérance semi-circulaire et circonférentielle qui forme un épaississement périmétrique.

9. Système destiné à l'établissement du positionnement de mâchoires dans l'espace au cours de traitements dentaires, conformément à l'une quelconque des revendications précédentes, **caractérisé en ce qu'**une première partie (12) du système de positionnement univoque présent dans la vis (1) est réalisée sous la forme d'une rainure verticale qui possède une section transversale de forme polygonale, parallèle à l'axe longitudinal de ladite vis (1) et est formée à un endroit situé sur la périphérie du corps (8), et une deuxième partie (12') du système de positionnement univoque présent sur la surface interne de la cavité (15) de la butée (5) est réalisée sous la forme d'une saillie verticale qui possède une section transversale de forme polygonale et sous la forme d'un arrangement radial par rapport à la base plus petite de ladite butée (5).

10. Système destiné à l'établissement du positionnement de mâchoires dans l'espace au cours de traitements dentaires, conformément à la revendication 9, **caractérisé en ce que** la rainure verticale réalisée à un endroit de la périphérie du corps (8) possède une profondeur qui est supérieure à la profondeur de l'évidement circonférentiel qui forme le système de rétention (11), sans toutefois couper un trou (6) destiné au logement de l'accessoire ou de l'outil à n'importe quel endroit.

11. Système destiné à l'établissement du positionnement de mâchoires dans l'espace au cours de traitements dentaires, conformément à l'une quelconque des revendications précédentes 2 à 10, **caractérisé en ce que** le corps (8) possède une configuration de forme toroïdale, et **en ce qu'**il possède un diamètre maximal dont les dimensions sont inférieures à celles du diamètre de la base plus grande de la portion de forme tronconique (7), qui forme une couronne circulaire (9) sur le corps en question.

12. Système destiné à l'établissement du positionnement de mâchoires dans l'espace au cours de traitements dentaires, conformément à la revendication 11, **caractérisé en ce qu'**une base plus petite de la butée (5) comprend une zone de support (10) possédant une configuration en forme de couronne circulaire, dont la configuration et les dimensions coïncident avec celles de la couronne circulaire (9).
